# EUROPEAN PATENT SPECIFICATION

(11) **EP 0 926 291 B1**
(45) Date of publication and mention of the grant of the patent: **06.02.2002**
(21) Application number: 98120903.4
(22) Date of filing: 04.11.1998
(51) Int. Cl.: D06F 37/20, F16F 15/00, F16F 3/04

(54) **Washing machine with improved anchoring means for the washing assembly**
Waschmaschine mit Verankerungsvorrichtung für den Laugenbehälter
Machine à laver avec dispositif d'ancrage de la cuve

(30) Priority: 22.12.1997 IT PN970071
(43) Date of publication of application: 30.06.1999
(73) Proprietor: Electrolux Zanussi S.p.A., 33170 Pordenone (IT)
(72) Inventor: Colombera, Giovanni, 33077 Sacile, Pordenone (IT)
(74) Representative: Agostini, Agostino

(56) References cited:
- FR-A- 2 531 461
- US-A- 4 343 452
- PATENT ABSTRACTS OF JAPAN vol. 018, no. 634 (C-1281), 2 December 1994 -& JP 06 246087 A (SANYO ELECTRIC CO LTD), 6 September 1994

## Description

The present invention refers to a washing machine, in particular such a washing machine for residential and similar uses, wherein it is hereby intended that, as used here, the term washing machine shall be understood to include also similar appliances, such as washer-driers.

Washing machines are generally known to comprise an outer stationary structure (which is generally referred to as "casing" in the art) and a so-called internal washing or oscillating assembly which substantially includes a tub enclosing and supporting a rotating drum driven by an electric motor. Elastic or spring elements, which may sometimes be integrated into friction-type shock-absorbing anchoring devices, are generally used to anchor such a washing assembly on to said outer stationary structure.

Examples of the prior art are for instance given by the washing machines disclosed in FR-A-2 531 461, EP-A-80 243 and EP-A-265 004.

US-A-4 343 452 discloses an elastic element composed of at least two independent springs, disposed with their axis parallel one to another. Accordingly a lower elastic factor is attained in comparison to a single spring disposition and it is said this an advantage with light modern washing machines. However, this is obtained by increasing the assembly complexity.

It is a main purpose of the present invention to provide an improved anchoring of the washing assembly to the outer stationary structure in view of facilitating the fabrication of the washing machine, reducing the costs and boosting the reliability thereof, this representing as many aims that are of paramount importance for mass-manufacturing companies with an output that usually reaches up to several hundreds of thousands of units per year.

A washing machine having the features as recited in the appended claims enables these and further aims to be reached, as this will become more readily apparent from the detailed description that is given below by way of non-limiting example with reference to the accompanying drawings, in which:
- Figure 1 is a simplified schematical view of a household washing machine of the front-loading type;
- Figures 2 and 3 are longitudinal-section views of one of the anchoring devices of the washing assembly of the washing machine illustrated in Figure 1, as it appears in two different phases of a washing cycle.

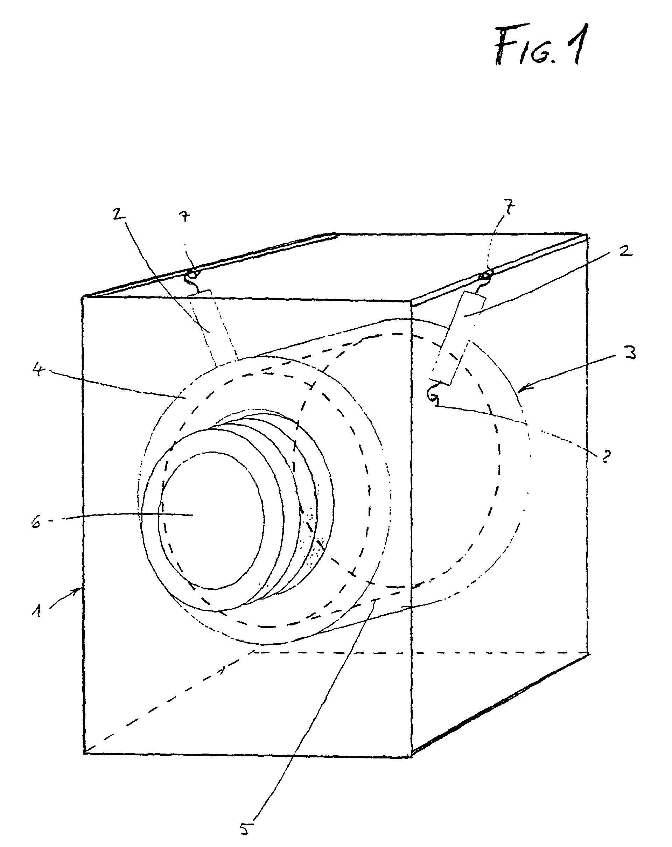

With particular reference to Figure 1, a household-type washing machine can be noticed to comprise an outer stationary structure 1, in the form of an outer casing, with at least a pair of anchoring devices 2 for elastically anchoring a washing assembly 3 in which an approximately cylindrical tub 4 accomodates a drum 5 that is arranged to rotate about a substantially horizontal axis as driven by an electric motor (not shown).

Said anchoring devices 2 are hooked on to eyelets 7, which are integral with the side wall of the stationary structure 1, and, respectively, to eyelets 8 that are integral with the outer surface of the tub 4 and, therefore, integral with the washing assembly 3. Loading and unloading of the clothes to be washed, ie. the washload, occur through a circular aperture 6 provided in the front portion of the washing assembly 3 and a therewith associated aperture, capable of being closed with a corresponding door (not shown), provided in the front wall of the stationary structure 1.

The washing machine is not described here any further in its overall construction owing to the fact that no further details are actually needed to ensure an adequate understanding the present invention and, on the other hand, the same washing machine may even be of the top-loading type, considering the universal nature of the anchoring means according to the present invention as far as the application scope thereof is concerned.

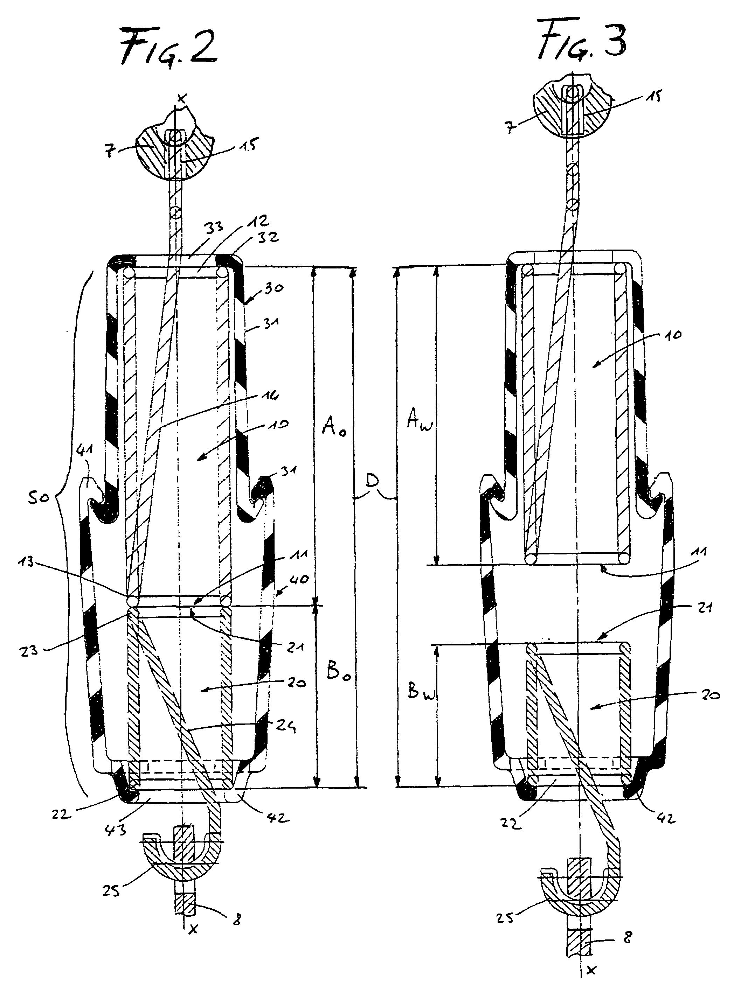

Figures 2 and 3 are sectional views of a preferred embodiment of an anchoring device 2 of the washing assembly according to the present invention, which consists substantially of a pair of special helical springs 10 and 20, which are arranged coaxially in series within a housing 50.

The first such helical spring 10 has end portions in the form of a first and a second circular coil 11 and 12. From said first end coil 11, in correspondence of the point indicated at 13, a relatively rigid prolongation 14 extends in an uninterrupted manner. Said prolongation 14, which is substantially rectilinear, extends inwards into the same spring 10, and its free end 15, which is in the shape of a hook, is aligned along the common axis x-x of the two springs 10 and 20 and protrudes beyond the opposite end coil 12 of the same first helical spring 10.

The second such helical spring 20, although shorter than, has the same design as the first one, with end portions in the shape of a first and a second circular coil 21 and 22. From said first end coil 21, in correspondence of the point indicated at 23, a relatively rigid prolongation 24 extends in an uninterrupted manner. Said prolongation 24, which is also substantially rectilinear, extends inwards into the same spring 20, and its free end 25, which is in the shape of a hook, is aligned along the common axis x-x of the two springs 10 and 20 and protrudes beyond the opposite end coil 22 of the same second helical spring 20. It therefore ensues that the helical springs 10 and 20 are in an opposite arrangement with respect to a plane that extends transversally to the axis x-x.

The housing 50 comprises a first and a second part 30 and 40 which are in the shape of cups and extend along the same axis x-x; they are provided along their mouth portions with respective male and female protrusions 31 and 41 to enable them to be snap-fitted together, as well as with elongated apertures 33 and 43 in the respective bottom portions 32 and 42. Owing to the reasons that will be better explained further on, said parts 30 and 40 are made of a material featuring adequate strength. The junction between the two parts is anyway such as to enable the housing 50 to be subsequently separated, with the use of a suitable tool, for instance in the case that repairs have to be carried out in the course of the life of the washing machine in which said anchoring device 2 is installed.

The assembly of said anchoring device calls for the helical springs 10 and 20 to be inserted in the first part 30 and the second part 40, respectively, of the housing 50, so that the hook-shaped free end portions 15 and 25 of the afore cited prolongations 14 and 24 are able to protrude from the bottom portions 32 and 42, respectively, through the elongated apertures 33 and 43 that are perpendicular to the axis x-x. The above mentioned snap-fitting or similar junction is in this way brought about with the practical effect that said first end coils 11 and 21 of the springs 10 and 20 are brought into contact with each other, while said second end coils 12 and 22 of the same springs are caused to abut against the bottom portions 32 and 42, respectively, as this can be best seen in Figure 2.

As a matter of fact, the component parts of an anchoring device 2 according to the present invention are so sized as to ensure that, if A_{R} and B_{R} are the free lengths of the springs 10 and 20 before assembly, ie. in an unstressed state thereof, between the bottom portions 32 and 42 of the housing 50, when the latter is closed, ie. fitted together, there is prevailing a distance D = (A_{O} + B_{O}) < (A_{R} + B_{R}). This practically means that, when thet are assembled, the springs 10 and 20 undergo a pre-compression that reduces their length from A_{R} to A_{O} and B_{R} to B_{O}, respectively.

At this point, the anchoring device 2 can be mounted in a washing machine. This can be made in such a manner as to either have the hook provided at the free end portion 15 of the prolongation 14 of the first spring 10 anchored on to the eyelet 7 on thestationary structure or casing 1 of the washing machine and the hook provided at the free end portion 25 of the prolongation 24 of the other spring 20 anchored on to the eyelet 8 on the tub 4 of the washing assembly 3, or vice-versa. In any case, the springs 10, 20 undergo a further, albeit relatively modest pre-compression that makes them still shorter since their second end coils 12 and 22 remain constantly in a position in which they are abutting against the bottom portions 32 and 42 of the housing 50.

Upon having been loaded with the clothes to be washed, and the water required to perform the related washing cycle, the washing assembly 3 may reach up to a weight of as much as 35 kg. This causes the hooks 15 and 25 to move away from each other and, therefore, brings about a further compression of the springs 10 and 20 which become still considerably shorter along their common axis x-x, while their second end coils 12, 22 push against the bottom portions 32, 22. This explains the reason why the housing 50 must be manufactured using a material featuring an adequate level of mechanical strength, which may for instance be some injection-moulded engineering polymer. The Applicant has found it to be of advantage if, when the washing assembly has in this way been loaded with the washload and the wash liquor so as to reach up to an overall weight of as many as approx. 35 kg, and is therefore ready to start a washing cycle, the lengths A_{W} and B_{W} (where "W" stands for washing) reached by the springs 10 and 20, respectively, are such that not only the first end coils 11 and 21 of the helical springs 10 and 20 separate from each other (see Figure 3), but also at least the shorter spring 20 is fully compressed, ie. has a length B_{W}=B_{MIN} in such a manner that the anchoring device 2 becomes very rigid.

In this way, the invention offers the practical advantage that the washing assembly 3 keeps substantially still, ie. does not move, with respect to the stationary structure 1 of the washing machine, without any risk of shocks, throughout the various phases of the washing cycle that are carried out with the drum 5 full of clothes and wash liquor and rotating at a low speed (for instance in the order of approx. 60 to 80 rpm).

When, in accordance with the washing cycle, the wash liquor is let off the drum 5 and the latter is driven to rotate at a high revolution speed (which may reach up to as many as 1,500 rpm) in view of carrying out the final spin-extraction phase, the washing assembly 3 is considerably lightened to the extent that it comes down to a weight that may be in the order of 22 kg or so, which thing does markedly contribute to reduce the compression stress which is imposed to the springs 10 and 20. These springs extend at this point to a length A_{S} and B_{S} (where "S" stands for spinning), respectively, where A_{W}<A_{S}<A_{O} and B_{W}<B_{S}<B_{O}, so that their first end coils 11 and 21 are able to come agian into contact with each other. It therefore ensues that, in the phases of the washing cycle in which the drum 5 of the washing machine rotates at a high speed, the anchoring device 2 finds itself with the springs 10 and 20 working in series with each other, so that its elastic constant reaches such a value as to effectively reduce the transmission of the oscillations of the washing assembly 3 to the stationary structure 1, this being effective in bringing about obvious advantages, particularly in the case of unbalanced washloads in the rotating drum.

It clearly emerges from the above description that, from a construction point of view, the anchoring device 2 has advantageously a particularly simple and low-cost construction, so that it ultimately has just a reduced impact on the overall cost of the washing machine. From an operational point of view, the described anchoring device has the advantage that its elastic constant has the ability of immediately and automatically adapting to the different conditions that are encountered during a washing cycle, ie. the different weights of the washing assembly 3 and the different revolving speeds of the rotating drum 5.

Although the above description has been given with reference to a preferred embodiment of the present invention, tt will be appreciated that a number of further embodiments and variants may be inferentially developed by those skilled in the art without departing from the scope of the present invention.

## Claims

1. Washing machine, wherein a washing assembly (3) comprising a wash tub (4) and a rotating drum (5) is anchored on to a stationary structure (1) by means of one or more anchoring devices (2) that include a pair of elastic elements (10, 20; 40, 50, 30) arranged in series with respect to each other and enclosed in a rigid housing (50), said elements (10, 20; 40, 50, 30) being subject to a compression stress that varies during a working cycle of the washing machine, **characterized in that** first end portions (11, 21) of said elastic elements (10, 20) are integral with associated rigid elements (14, 24) whose free end portions (15, 25), which constitute the two anchoring points of said device (2), protrude in opposite directions from apertures (33, 43) provided in parts (32, 42) of said housing (50) and located in opposite parts of the housing (50) along the same axis as the elastic elements, and said parts (32, 42) act as the abutment for second end portions (12, 22) of said elastic elements (10, 20).

2. Washing machine according to claim 1, **characterized in that** said anchoring points for attachment to the free ends (15, 25) of said rigid elements (14, 24) are aligned along the same axis (x-x) of said elastic elements (10, 20).

3. Washing machine according to claim 1 or 2, **characterized in that** in at least a part of the working cycle of the washing machine, preferably during the phases in which the drum (5) rotates at a high revolution speed, said first end portions (11, 21) of said elastic elements (10, 20) are in contact with each other, and in at least another part of the working cycle of the washing machine, preferably during the phases in which the tub (4) is filled with water and the drum (5) rotates at a low revolution speed, the same first end portions (11, 21) of said elastic elements (10, 20) are separated from each other.

4. Washing machine according to any of the preceding claims, wherein said elastic elements (10, 20) are in the form of helical springs and their first and second end portions (11, 12; 21, 22) consist of circular coils, **characterized in that** said rigid elements (14, 24) consist of prolongations extending in a continuous manner into the respective elastic elements (10, 20) from a point (13, 23) of said first end portions (11, 21).

5. Washing machine according to any of the preceding claims, **characterized in that** said housing (50) consists of two parts (30, 40) which are preferably moulded from an engineering polymer and are integrally provided with preferably threaded or snap-fitting joinable means (31, 41) enabling said parts to be fastened together.

6. Washing machine according to claim 5, **characterized in that** said two parts (30, 40) of the housing (50) are in the shape of cups and that said apertures (33, 43) for the rigid end portions (15, 25) of said rigid elements (14, 24) are provided in the mutually opposing bottom portions (32, 42) of the same parts (30, 40).

7. Washing machine according to any of the preceding claims, **characterized in that** the free end portions (15, 25) of said rigid elements (14, 24) are in the shape of hooks capable of being anchored on to either the stationary structure (1) and the washing assembly (3) or vice-versa.

## Patentansprüche

1. Waschmaschine, wobei eine Waschbaugruppe (3), die einen Laugenbehälter (4) und eine sich drehende Trommel (5) umfasst, an einer stationären Struktur (1) durch eine oder mehrere Verankerungsvorrichtungen (2) verankert ist, die ein Paar elastischer Elemente (10, 20; 40, 50, 30) enthalten, die hintereinander angeordnet und in einem starren Gehäuse (50) eingeschlossen sind, wobei die Elemente (10, 20; 40, 50, 30) einer Druckbelastung ausgesetzt sind, die während eines Arbeitszyklus der Waschmaschine variiert, **dadurch gekennzeichnet, dass** erste Endabschnitte (11, 21) der elastischen Elemente (10, 20) eine Einheit mit dazugehörigen starren Elementen (14, 24) bilden, deren freie Endabschnitte (15, 20), die die zwei Verankerungspunkte der Vorrichtung (2) bilden, in einander entgegengesetzten Richtungen aus Öffnungen (33, 43) vorstehen, die in Teilen (32, 42) des Gehäuses (50) vorhanden und in entgegengesetzten Teilen des Gehäuses (50) auf derselben Achse wie die elastischen Elemente angeordnet sind, und die Teile (32, 42) als der Anschlag für zweite Endabschnitte (12, 22) der elastischen Elemente (10, 20) wirken.

2. Waschmaschine nach Anspruch 1, **dadurch gekennzeichnet, dass** die Verankerungspunkte zum Anbringen an den freien Enden (15, 25) der starren Elemente (14, 24) auf der gleichen Achse (x-x) der elastischen Elemente (10, 20) ausgerichtet sind.

3. Waschmaschine nach Anspruch 1 oder 2, **dadurch gekennzeichnet, dass** während wenigstens eines Teils des Arbeitszyklus der Waschmaschine, vorzugsweise während der Phasen, in denen sich die Trommel (5) mit hoher Drehzahl dreht, die ersten Endabschnitte (11, 21) der elastischen Elemente (10, 20) in Kontakt miteinander sind, und während wenigstens eines anderen Teils des Arbeitszyklus der Waschmaschine, vorzugsweise während der Phasen, in denen der Laugenbehälter (4) mit Wasser gefüllt ist und sich die Trommel (5) mit niedriger Drehzahl dreht, die gleichen ersten Endabschnitte (11, 21) der elastischen Elemente (10, 20) voneinander getrennt sind.

4. Waschmaschine nach einem der vorangehenden Ansprüche, wobei die elastischen Elemente (10, 20) die Form von Schraubenfedern haben und ihre ersten sowie zweiten Endabschnitte (11, 12; 21, 22) aus Kreiswindungen bestehen, **dadurch gekennzeichnet, dass** die starren Elemente (14, 24) aus Verlängerungen bestehen, die sich von einem Punkt (13, 23) der ersten Endabschnitte (11, 21) aus fortlaufend in die entsprechenden elastischen Elemente (10, 20) hinein erstrecken.

5. Waschmaschine nach einem der vorangehenden Ansprüche, **dadurch gekennzeichnet, dass** das Gehäuse (50) aus zwei Teilen (30, 40) besteht, die vorzugsweise aus einem technischen Polymer geformt sind und integral mit vorzugsweise mit Gewinde versehenen oder durch Einschnappen verbindbaren Einrichtungen (31, 51) versehen sind, die es ermöglichen, die Teile aneinander zu befestigen.

6. Waschmaschine nach Anspruch 5, **dadurch gekennzeichnet, dass** die zwei Teile (30, 40) des Gehäuses (50) die Form von Schalen haben, und dass die Öffnungen (33, 43) für die starren Endabschnitte (15, 25) der starren Elemente (14, 24) in den einander gegenüberliegenden unteren Abschnitten (32, 42) derselben Teile (30, 40) vorhanden sind.

7. Waschmaschine nach einem der vorangehenden Ansprüche, **dadurch gekennzeichnet, dass** die freien Endabschnitte (15, 25) der starren Elemente (15, 25) die Form von Haken haben, die sowohl an der stationären Struktur (1) als auch der Waschbaugruppe (3) verankert werden können oder umgekehrt.

## Revendications

1. Machine à laver, dans laquelle un ensemble de lavage (3) comprenant une cuve de lavage (4) et un tambour rotatif (5) est ancré sur une structure statique (1) au moyen d'un ou de plusieurs dispositifs d'ancrage (2) qui comprennent une paire d'éléments élastiques (10, 20 ; 30, 40, 50) aménagés en série les uns par rapport aux autres et enfermés dans un logement rigide (50), lesdits éléments (10, 20 ; 30, 40, 50) étant soumis à une contrainte en compression qui varie au cours d'un cycle de travail de la machine à laver, **caractérisée en ce que** des premières parties d'extrémité (11, 21) desdits éléments élastiques (10, 20) sont formées en une seule pièce avec des éléments rigides associés (14, 24) dont des parties d'extrémité libre (15, 25), qui constituent les deux point d'ancrage dudit dispositif (2), sont en saillie dans des directions opposées à partir d'ouvertures (33, 43) aménagées dans des parties (32, 42) dudit logement (50) et positionnées dans des parties opposées du logement (50) sur le même axe que les éléments élastiques, et lesdites parties (32, 42) agissent en tant que butée pour de secondes parties d'extrémité (12, 22) desdits élément élastiques (10, 20).

2. Machine à laver selon la revendication 1, **caractérisée en ce que** lesdits points d'ancrage destinés à la fixation des extrémités libres (15, 25) desdits éléments rigides (14, 24) sont alignés dans le même axe (x - x) que lesdits éléments élastiques (10, 20).

3. Machine à laver selon la revendication 1 ou la revendication 2, **caractérisée en ce que** dans au moins une partie du cycle de travail de la machine à laver, de préférence au cours des phases dans lesquelles le tambour (5) tourne à haute vitesse de rotation, lesdites premières parties d'extrémité (11, 21) desdits éléments élastiques (10, 20) sont en contact l'une avec l'autre, et **en ce que** dans au moins une autre partie du cycle de travail de la machine à laver, de préférence au cours des phases pendant lesquelles la cuve (4) est remplie d'eau et le tambour tourne à une faible vitesse de rotation, les mêmes premières parties d'extrémité (11, 21) desdits éléments élastiques (10, 20) sont séparées l'une de l'autre.

4. Machine à laver selon l'une quelconque des revendications précédentes, dans laquelle lesdits éléments élastiques (10, 20) se présentent sous la forme de ressorts hélicoïdaux et leurs première et seconde parties d'extrémité (11, 12 ; 21, 22) se composent de spirales circulaires, **caractérisée en ce que** lesdits éléments rigides (14, 24) se composent d'extensions qui s'étendent de manière continue à l'intérieur des éléments élastiques respectifs (10, 20) à partir d'un point (13, 23) desdites premières parties d'extrémité (11, 21).

5. Machine à laver selon l'une quelconque des revendications précédentes, **caractérisée en ce que** ledit logement (50) se compose de deux parties (30, 40) qui, de préférence, sont moulées à partir d'un polymère industriel et comportent de préférence des moyens pouvant être assemblés par encliquetage ou par filetage (31, 41) permettant aux dites parties d'être fixées ensemble.

6. Machine à laver selon la revendication 5, **caractérisés en ce que** lesdites deux parties (30, 40) du logement (50) ont une forme de coupe et **en ce que** lesdites ouvertures (33, 43) destinées aux parties d'extrémité rigides (15, 25) desdits éléments rigides (14, 24) sont aménagées dans les parties d'embase en opposition mutuelle (32, 42) des mêmes parties (30, 40).

7. Machine à laver selon l'une quelconque des revendications précédentes, **caractérisée en ce que** les parties d'extrémité libres (15, 25) desdits éléments rigides (14, 24) ont une forme de crcchet susceptible d'être ancré soit sur la structure statique (1), soit sur l'ensemble de lavage (3) ou vice versa.
